(19) Europäisches Patentamt
European Patent Office
Office européen des brevets

(11) EP 0 977 708 B1

(12) EUROPÄISCHE PATENTSCHRIFT

(45) Veröffentlichungstag und Bekanntmachung des Hinweises auf die Patenterteilung:
**20.10.2004 Patentblatt 2004/43**

(21) Anmeldenummer: **98924145.0**

(22) Anmeldetag: **17.04.1998**

(51) Int Cl.[7]: **C01B 17/04**

(86) Internationale Anmeldenummer:
**PCT/EP1998/002297**

(87) Internationale Veröffentlichungsnummer:
**WO 1998/049098 (05.11.1998 Gazette 1998/44)**

(54) **VERFAHREN UND VORRICHTUNG ZUR UMWANDLUNG VON SCHWEFELWASSERSTOFF IN ELEMENTAREN SCHWEFEL**

METHOD AND DEVICE FOR CONVERTING HYDROGEN SULFIDE INTO ELEMENTAL SULFUR

PROCEDE ET DISPOSITIF POUR CONVERTIR DE L'ACIDE SULFHYDRIQUE EN SOUFRE ELEMENTAIRE

(84) Benannte Vertragsstaaten:
**AT BE CH CY DE ES FI FR GB GR IT LI NL SE**
Benannte Erstreckungsstaaten:
**RO SI**

(30) Priorität: **30.04.1997 DE 19718261**

(43) Veröffentlichungstag der Anmeldung:
**09.02.2000 Patentblatt 2000/06**

(73) Patentinhaber: **Messer Griesheim GmbH
65933 Frankfurt am Main (DE)**

(72) Erfinder:
- **GROSS, Gerhard
D-47877 Willich (DE)**
- **SPITALERI, Vincenzo
D-85051 Ingolstadt (DE)**

(56) Entgegenhaltungen:
**EP-A- 0 701 967** **WO-A-89/12023**
**GB-A- 2 107 450** **US-A- 4 632 818**

- **"OXYGEN ENRICHMENT ENHANCES PLANT PERFORMANCE" SULPHUR, Nr. 241, 1. November 1995, Seiten 45-49, 51 - 53, XP000541017**
- **"LEADING BURNER DESIGNS FOR SULPHUR PLANTS" SULPHUR, Nr. 224, 1. Januar 1993, Seiten 23-28, 30 - 34, XP000328309**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 977 708 B1

## Beschreibung

Die Erfindung betrifft ein Verfahren zur Umwandlung von Schwefelwasserstoff ($H_2S$) in elementaren Schwefel (S).

Schwefel wird bei vielen chemischen Verfahren entweder in elementarer Form oder in Form von Schwefelsäure benötigt. Aber Schwefel ist hochgiftig in Form von Schwefeldioxid ($SO_2$) oder als Schwefelwasserstoff. Daher gibt es maximal zulässige Emissionsgrenzwerte für diese Schwefelverbindungen, die weltweit verschärft werden.

Fossile Brennstoffe, wie Erdgas, Kohle, Ölsand, Ölschiefer und Erdöl, enthalten organische und anorganische Schwefelverbindungen. Es ist erforderlich, diese Schwefelverbindungen zu entfernen oder in unschädliche Schwefelverbindungen umzuwandeln. Für die Entfernung der Schwefelverbindungen aus Brennstoffen und Verbrennungsprodukten existieren eine Vielzahl von physikalischen und chemischen Umwandlungsprozessen.

Bei festen Brennstoffen werden die Schwefelverbindungen nach der Verbrennung im Kraftwerk als Schwefeldioxid durch eine Rauchgasentschwefelung mittels Kalkmilch absorbiert und in Calciumsulfit umgewandelt. Durch Oxidation mit im Abgas enthaltenem Restsauerstoff entsteht als Endprodukt Gips.

Bei flüssigen Brennstoffen, wie zum Beispiel Dieselkraftstoff oder leichtes Heizöl, sind maximal zulässige Schwefelgehalte vorgeschrieben. Denn eine Entschwefelung der Rauchgase nach einer eventuellen Verbrennung, zum Beispiel in Motoren, ist nicht mehr zu realisieren. Die Entschwefelung dieser Brennstoffe wird in den Raffinerien durchgeführt. Die im Rohöl vorhandenen Schwefelverbindungen werden im Destillat wiedergefunden, wobei die Schwerölfraktion die höchsten Schwefelkonzentrationen aufweist.

Die Entschwefelung erfolgt mit Hilfe von gasförmigem Wasserstoff ($H_2$). Die organischen Schwefelverbindungen werden dabei in Schwefelwasserstoff umgewandelt. Der Schwefelwasserstoff, der im Gasgemisch mit Wasserstoff und anderen Kohlenwasserstoffen vorliegt, wird in Aminwäschern als Claus- oder Schwefelwasserstoffgas mit Konzentrationen von bis zu 90 Vol.% Schwefelwasserstoff ausgewaschen. Schwefelwasserstoff entsteht auch in den Sauerwasserstripperkolonnen. Hier liegt Schwefelwasserstoff als wässriges Kondensat vor und wird als Sauerwasserstrippergas (SWS-Gas) mit bis zu 50 Vol.% Schwefelwasserstoff ausgestrippt. Zusätzlich können bis zu 50 Vol.% Ammoniak ($NH_3$) enthalten sein, das durch Zersetzung organischer Stickstoffverbindungen entsteht.

Auch bei der Verbrennung von Kohle oder Schweröl in Kraftwerken, bei der der Brennstoff zuvor unter Sauerstoffmangel vergast wird, entsteht ein schwefelwasserstoffhaltiges Synthesegas, welches vor der Verbrennung gereinigt wird.

Schwefelwasserstoff kommt außerdem in unterschiedlichen Konzentrationen im Erdölbegleitgas und im Erdgas mit einem Anteil von bis zu 30 Vol.% und im Abgas von Kläranlagen mit einem Anteil von bis zu 5 Vol.% Schwefelwasserstoff vor.

Die industrielle Verwertung von Schwefelwasserstoff ist begrenzt. Daher wird er zunächst in elementaren Schwefel und anschließend in speziellen Anlagen in Schwefelsäure umgewandelt. Elementarer Schwefel wird in der Gummiindustrie benötigt. Schwefelsäure wird in der chemischen Industrie eingesetzt.

Eine direkte Umwandlung von Schwefelwasserstoff in elementaren Schwefel ist durch eine thermische Spaltung von Schwefelwasserstoff, eine nasse Oxidation von Schwefelwasserstoff in einer flüssigen (wässrigen) Phase und eine trockene Oxidation von Schwefelwasserstoff in der Dampfphase möglich.

Das mit weltweit über 2000 Anlagen am häufigsten genutzt direkte Umwandlungsverfahren ist das bereits 1883 entwickelte Claus-Verfahren. Dieses Verfahren beruht auf einem trockenen Oxidationsprozeß. Eine Vielzahl von Prozeßvarianten sind entstanden. Alle Prozeßvarianten beruhen auf denselben chemischen Grundreaktionen sowie auf die Verwendung eines thermischen und eines katalytische Reaktors.

Der thermische Reaktor besteht aus einer Brennkammer mit einem Brenner, einem Abhitzekessel und einem ersten Schwefelkondensator. Der katalytische Reaktor ist zwei- oder dreistufig ausgeführt. Die Stufen weisen jeweils einen Erhitzer, ein Katalysatorbett und einen Schwefelkondensator auf.

In der Brennkammer und den katalytischen Reaktoren laufen fologende chemische Grundreaktionen ab:

$$1.\quad H_2S + 1/20_2 + 1{,}88N_2 \rightarrow 1/3SO_2 + 2/3H_2S + 1/3H_2O + 1{,}88N_2$$

$$2.\quad 1/3SO_2 + 2/3H_2S + 1/3H_2 + 1{,}88N_2 \rightarrow S + H_2O + 1{,}88N_2$$

---

$$\text{Gesamt:}\quad H_2S + 1/2O_2 + 1{,}88N_2 \rightarrow S + H_2O + 1{,}88N_2$$

Die übrigen, prozeßbedingt vorhandenen Begleitgase, wie zum Beispiel Wasserstoff, Methan, höhere Kohlenwasserstoffe, Ammoniak, Wasserdampf, Kohlendioxid, reagieren entsprechend ihren Konzentrationen in einer Vielzahl von Nebenreaktionen.

Die eigentliche Clausreaktion zwischen Schwefeldioxid und Schwefelwasserstoff, bei der elementarer Schwefel und Wasserdampf gebildet wird, ist Reaktion 2. Diese läuft im Katalysatorbett ab.

Elementarer Schwefel wird darüber hinaus direkt durch die thermische Spaltung von Schwefelwasserstoff in Schwefel und Wasser in der Brennkammer erzeugt:

3. $H_2S \rightarrow H_2 + 1/2\ S_2$

Diese Reaktion ist stark endotherm.

Verfahrenstechnisch wird ein Drittel der Schwefelwasserstoffmenge, meist ein Gemisch aus Claus- und Sauerwasserstrippergas, durch den Brenner mittels Verbrennungsluft unterstöchiometrisch zu einem Drittel Schwefeldioxid verbrannt. Der verbleibende Schwefelwasserstoff spaltet sich thermisch im Temperaturbereich zwischen 900°C bis 1300°C in der Brennkammer in Schwefel und Wasserstoff auf und wird katalytisch bei Temperaturen zwischen 180°C und 400°C in den katalytischen Reaktoren mit dem unverbrannten Schwefelwasserstoff zu elementaren Schwefel und Wasser umgesetzt. Die Umsetzung zu Schwefel ist optimal, wenn das Schwefelwasserstoff/Schwefeldioxid-Verhältnis zwei zu eins beträgt. Das optimale Verhältnis wird jedoch in der Praxis nur näherungsweise erreicht.

Der in der Brennkammer gebildete elementare Schwefel wird nach Abkühlung des Prozeßgases nach dem Abhitzekessel und im ersten Schwefelkondensator bereits flüssig abgeschieden. In den nachgeschalteten katalytischen Reaktoren wird das abgekühlte Prozeßgas vor Eintritt in die Katalysatoren durch die vorgeschalteten Erhitzer mittels Hochdruckdampf oder Wärmeträgeröl auf die notwendige Reaktionstemperatur erhitzt. Der durch die Clausreaktion gebildete Schwefel wird ebenfalls in den Schwefelkondensatoren flüssig abgeschieden.

Aufgrund der unterschiedlichen Schwefelwasserstoffkonzentration im Einsatzgas gibt es bei den konventionellen Claus-Prozessen zwei Hauptvarianten: den Hauptstrom-Betrieb für Schwefelwasserstoffkonzentrationen größer 50 Vol.% und den Nebenstrom-Betrieb für Schwefelwasserstoffkonzentrationen zwischen 30 Vol.% und 50 Vol.%.

Beim Hauptstrom-Betrieb wird die gesamte Schwefelwasserstoffmenge mit der Verbrennuncasluft in der Brennkammer teilverbrannt. Durch die thermische Spaltung des Schwefelwasserstoffs in der Brennkammer wird bereits ein großer Schwefelanteil im ersten Schwefelkondensator nach dem Abhitzekessel abgeschieden. Für schwefelwasserstoffreiches Gas beträgt der Schwefelumsetzungsgrad bei einem dreistufigen Claus-Prozeß 96 bis 97 %.

Nachgeschaltete Tailgasbehandlungsanlagen, meist Claus-Prozesse mit thermischer Nachverbrennung, ermöglichen es anschließend, die von der Anlagenkapazität abhängigen gesetzlichen Grenzwerte einzuhalten.

Bei Nebenstrom-Betrieb wird aufgrund des geringen Heizwertes des Schwefelwasserstoffgases der Gasstrom aufgeteilt. Mindestens ein Drittel des Schwefelwasserstoffgases wird mit der notwendigen Verbrennungsluft in der Brennkammer verbrannt und das entstandene schwefeldioxidreiche Reaktionsgas wird vor dem ersten Reaktor mit dem restlichen Schwefelwasserstoffgas vermischt. Bei diesem Prozeß wird in der Brennkammer kein elementarer Schwefel gebildet, da das Schwefelwasserstoff-Gas vollständig verbrannt wird.

Bei Schwefelwasserstoffkonzentrationen kleiner 30 Vol.% ist auch der Nebenstrom-Betrieb aufgrund des niedrigen Heizwertes nicht mehr einsetzbar. Die Verbrennung wird dann instabil. Darüber hinaus erfordert der Nebenstrom-Betrieb in der Regel ein ammoniakfreies Einsatzgas. Sonst werden über den Bypass die Katalysatoren mit Ammoniak kontaminiert. Bei Anwesenheit von Ammoniak, beispielsweise bei Einsatz von Sauerwasserstrippergas, muß das Sauerwasserstrippergas, getrennt vom Clausgas in der Brennkammer verbrannt werden. Diese Qualitäten des Einsatzgases erfordern geänderte Varianten des Claus-Prozesses.

Für eine produktionsbedingte Steigerung der Raffinationskapazität, einen Einsatz von preiswerteren aber schwefelreicheren Rohölqualitäten oder für reduzierte Schwefelkonzentrationsgrenzwerte im Endprodukt weisen die vorhandenen Claus-Anlagen oft ein zu geringe Schwefelkapazität auf. Der Begriff "Schwefelkapazität" bedeuted hier die pro Zeiteinheit erzeugte Menge an Schwefel.

Neben dem eventuell notwendigen Neubau oder Umbau der Claus-Anlage, besteht auch die Möglichkeit, den apparativen Engpaß durch Verwendung von Sauerstoff zu umgehen. Bei diesen Verfahren wird die Verbrennungsluft teilweise oder vollständig durch Sauerstoff ersetzt. Durch den Einsatz von Sauerstoff wird die Verbrennungstemperatur erhöht und der Inertgasanteil wird reduziert oder eliminiert. Daß bedeutet, das spezifische Prozeßgasvolumen und damit der Anlagendruckverlust wird reduziert. Damit kann der Durchsatz von Sauerwassergas und Clausgas erhöht werden und schwefelwasserstoffarme Einsatzgase mit geringem Heizwert und hohem Ammoniak-Gehalt auch in einem Hauptstromreaktor verarbeitet werden. Die Anwendung von Sauerstoff in Clausanlagen ist heute Stand der Technik.

Bei den heute eingesetzten Prozessen ist die Anreicherung der Verbrennungsluft mit Sauerstoff am einfachsten zu realisieren. Der Mehrdurchsatz an Schwefelwasserstoff ist proportional zur Menge an zugeführtem Sauerstoff. Die maximal mögliche Sauerstoffmenge wird durch die zulässigen Betriebstemperaturen des Brenners, des Abhitzekesseis und des ersten Reaktors begrenzt.

In Abhängigkeit vom vorhandenen Brenner beträgt die maximal zulässige Sauerstoffkonzentration 27 bis 28 Vol.%, wobei die zulässigen Betriebstemperaturen des Brenners, des Abhitzekessels und des ersten Reaktors limitierend sind. Der Umsetzungsgrad an Schwefel wird im Vergleich zum konventionellen Claus-Verfahren nicht erhöht.

Beim COPE-Prozeß wird die Verbrennungsluft mit Sauerstoff angereichert, wobei höhere Konzentrationen mit bis zu 100 Vol.% Sauerstoff realisiert werden können. Dazu wird ein spezieller Brenner und ein zusätzliches Kreislaufgebläse benötigt. Bei diesem Verfahren wird die durch die hohe Sauerstoffkonzentration bedingte Temperatursteigerung in der Brennkammer und im Abhitzekessel durch Rezirkulation von kaltem Prozeßgas kompensiert. Das Prozeßgas wird nach dem ersten Schwefelkondensator angesaugt und durch den Brenner in die Brennkammer zu einer Senkung der Temperatur eingeblasen. Aufgrund der höheren Prozeßgasmengen steigt der Druckverlust in der Brennkammer und im Abhitzekessel. In den nachgeschalteten katalytischen Reaktorstufen ist der Druckverlust aufgrund der reduzierten Prozeßgasmengen geringer.

Der Lurgi-Sauerstoff-Clausbrenner ist ein Brenner, der mit Luft, mit Sauerstoff, oder mit Luft und Sauerstoff als Oxidationsmedium betrieben werden kann. Die maximal mögliche Sauerstoffkonzentration beträgt ca. 80 Vol.%. Das Clausgas und das ammoniakhaltige Sauerwasserstrippergas werden separat zugeführt. Das Sauerwasserstrippergas wird mit Luft in einer zentralen Brennermuffel zusammen mit dem Heizgas verbrannt. Das Clausgas wird mit Sauerstoff und Luft als Oxidationsmedium mit mehreren doppelkonzentrischen Einzelbrennern, die symmetrisch um die Brennermuffel angeordnet sind, verbrannt. Ein Einzelbrenner besteht aus einer zentralen Sauerstoffdüse, einer konzentrischen Clausgasdüse und einer doppelkonzentrischen Luftdüse. Durch dieser Anordnung entstehen einzelne Sauerstoff/Schwefelwasserstoff-Flammen, die von kälteren Luft/Schwefelwasserstoff-Flammen umhüllt werden. Dadurch wird die Temperatur in der Brennkammer kontrolliert. Eine Rezirkulation von kaltem Prozeßgas zur Temperaturabsenkung ist auch bei hohen Sauerstoffmengen nicht notwendig.

Beim SURE-Prozeß wird ebenfalls sauerstoffangereicherte Luft oder 100 Vol.% Sauerstoff als Oxidationsmedium verwendet.

Beim SURE-Doppelverbrennungsprozeß wird die Verbrennung des Schwefelwasserstoffes mit zwei in Serie geschalteten, jeweils mit einem Abhitzekessel und einem Schwefelkondensator ausgerüsteten Brennkammern, durchgeführt. Das Schwefelwasserstofgas wird mit einer Teilmenge des Sauerstoffs in der ersten Brennkammer verbrannt, in einem Abhitzekessel abgekühlt, in die zweite Brennkammer durch einen Brenner überführt und die für die Clausreaktion benötigten Menge an Restsauerstoff zugegeben. Durch diese Aufteilung wird ebenfalls die Temperatur in den Brennkammern kontrolliert.

Beim SURE-Seitenstrombrennerprozeß ist vor den vorhandenen Claus-Prozeß eine separate Brennkammer geschaltet. Das Schwefelwasserstoffgas wird auf beide Brennkammern aufgeteilt. In der ersten Brennkammer wird durch Verbrennung mit Sauerstoff ausschließlich Schwefeldioxid erzeugt. Zur Temperaturkontrolle wird nach dem Abhitzekessel ein Teilstrom des abgekühlten schwefeldioxidhaltigen Teilstroms mit dem restlichen Schwefelwasserstoffgas und Sauerstoff durch einen Brenner in die eigentliche Brennkammer eingeblasen, um das für die Clausreaktion notwendige Schwefelwasserstoff/Schwefeldioxid-Verhältnis einzustellen.

Der Einsatz von bis zu 100 Vol. % Sauerstoff als Oxidationsmedium bietet das höchste Potential zur Leistungssteigerung von Claus-Anlagen. Dazu müssen aber nicht unerhebliche Investionskosten in die Anlagentechnik aufgewendet werden. Bei allen bekannten Sauerstoff-Claus-Verfahren müssen mindestens der Brenner und die Brennkammer ersetzt werden. Weitere Kosten entstehen, wenn zusätzlich ein Kreislaufgasgebläse oder eine zweite Brennkammer mit Abhitzekessel und Schwefelkondensator benötigt werden. Darüber hinaus ist der Betrieb eines Kreislaufgebläses durch mögliche Schwefelablagerungen nicht unproblematisch.

Das dann vorhandene hohe Potential an Durchsatzleistung kann jedoch meist nicht ausgeschöpft werden, da die nachgeschalteten Aggregate, wie zum Beispiel die katalytischen Reaktoren, einen Engpaß darstellen. Dagegen benötigt die Sauerstoffanreicherung die geringsten Investionskosten, bietet aber mit nur max. 28 Vol.% Sauerstoff in der Verbrennungsluft das geringste Potential zur Leistungssteigerung einer Claus-Anlage.

Auch aus der Patentanmeldung WO-A-8 912 023 ist ein zweistufiges Verbrennungsverfahren von Schwefelwasserstoff bekannt, wobei sauerstoffreiches Gas zu einem Brenner geführt wird.

Der Erfindung liegt daher die Aufgabe zugrunde, die Nachteile des Standes der Technik zu überwinden und ein Verfahren vorzusehen, mit dem insbesondere die Durchsatzleistung und der Umsetungsgrad von Schwefelwasserstoff zu elementaren Schwefel verbessert wird. Das Verfahren soll darüber hinaus mit vergleichsweise geringem zusätzlichen Aufwand in bereits vorhandene Claus-Anlagen intergriert werden können.

Die Aufgabe wird mit einem Verfahren mit den Merkmalen gemäß des Anspruchs 1 gelöst. Bevorzugte Ausgestaltungen sind in den Unteransprüchen angegeben.

Das erfindungsgemäße Verfahren hat den Vorteil, daß die Schwefelkapazität von Claus-Anlagen unter Verwendung von Sauerstoff oder eines sauerstoffreichen Gases erhöht wird, wobei nur geringe Investitionskosten nötig sind. Gleichzeitig sind aber wesentlich höhere Sauerstoffkonzentrationen oder Schwefelwasserstoffdurchsätze, im Vergleich zu einer konventionellen Sauerstoffanreicherung, möglich.

Erfindungsgemäß wird der Sauerstoff nicht wie bisher nur als Oxidationsmedium verwendet, sondern zusätzlich zur Steigerung der Mischungsenergie eingesetzt, um die Vermischung zwischen Oxidationsmittel und Einsatzgas in der vorhandenen Brennkammer zu verbessern. Durch die Steigerung der Mischungsenergie kann die Verbrennungsdichte und damit der Durchsatz von Schwefelwasserstoff erhöht werden. Denn in die vorhandene Brennkammer wird so eine zusätzliche Nachverbrennungszone integriert, die durch hochturbulente selbstansaugende Sauerstoffstrahlen erzeugt wird. Damit wird das aus dem Combustor oder dem Brenner austretende, mit Luft teilreagierte bzw. vorgemischte Prozeßgas vollständig nachverbrannt. Darüber hinaus laufen die in der Brennkammer stattfindenden Reaktionen näher am thermodynamischen Gleichgewicht ab. Die Begriffe "teilverbrennen" und "nachverbrennen" beziehen sich auf die stöchiometrische Verbrennung.
Anstelle von technisch reinem Sauerstoff, der komprimiert per Rohrleitung angeliefert wird oder verflüssigt aus vakuumisolierten Behältern mit hohem Druck entnommen wird, kann auch Sauerstoff mit einer Reinheit von 80 Vol.% bis 100 Vol.% Sauerstoffanteil verwendet werden. Dieser wird vorzugsweise durch Molekularsiebadsorptionsanlagen, beispielsweise Vakuumwechseladsorptionsanlagen (VSA) oder Vakuumdruckwechseladsorptionsanlagen (PVSA) direkt beim Verbraucher hergestellt.

Der Zusatzsauerstoff wird erfindungsgemäß nicht wie bisher über den Brenner durch Anreicherung der Verbrennungsluft zudosiert, sondern vorzugsweise durch mindestens eine oder eine Vielzahl von Einzeldüsen mit hoher Geschwindigkeit eingeblasen. Diese sind, in Abhängigkeit von der vorhandenen Konstruktion der Brennkammer, in der Brennkammerwand im Übergangsbereich zum Combustor oder nach dem Brenner am Anfang der Brennkammer, symmetrisch verteilt eingebaut.

Das aus dem Combustor oder aus dem Brenner austretende, mit der Verbrennungsluft des Brenners unterstöchiometrisch verbrannte oder vorgemischte Prozeßgas wird infolge der intensiven Mischung mit dem Sauerstoff vollständig nachverbrannt und das für die Clausreaktion benötigte stöchiometrische Schwefelwasserstoff/Schwefeldioxid -Verhältnis von zwei zu eins eingestellt, wobei das Schwefelwasserstoff/Schwefeldioxid -Verhältnis vor der Tailgasbehandlungsanlage gemessen wird.

Für eine intensive Mischung liegt die Austrittsgeschwindigkeiten aus den Sauerstoffeinzeldüsen vorzugsweise in einem Bereich der Machzahl zwischen 0,4 und 2. Unter Machzahl (Ma) ist hier das Verhältnis der Düsenaustrittsgeschwindigkeit zur Schallgeschwindigkeit der Gase zu verstehen. Aufgrund der relativ hohen Austrittsgeschwindigkeit des Sauerstoffs entstehen hochturbulente Freistrahlen, die die umgebende Brennkammeratmosphäre ansaugen, sich vermischen und mit den brennbaren Bestandteilen reagieren. Der Schwefelwasserstoff wird dabei zu Schwefeldioxid verbrannt.

Bei einer Austrittsgeschwindigkeit entsprechend einer Machzahl von eins, daß heißt Schallgeschwindigkeit, stellt sich zum Beispiel aufgrund der intensiven Mischung das stöchiometrische Schwefelwasserstoff/Schwefeldioxid -Verhältnis von zwei zu eins ein. Das bedeutet, der in der Brennkammer vorhandene Sauerstoff wird vollständig umgesetzt. Durch die vollständige Umsetzung des Sauerstoffs wird die Standzeit des ersten katalytischen Reaktors verlängert. Denn bei Reaktortemperaturen von 380°C bis 550°C reagiert der sonst in Claus-Anlagen vorhandene Überschußsauerstoff mit dem vorhandenen Schwefeldioxid zu Schwefeltrioxid (SO3), das mit den Katalysatorpellets aus Aluminiumoxid nach der folgenden Reaktionsgleichung reagiert:

$$4. \qquad Al_2O_3 + SO_3 \rightarrow Al_2SO_4 + O_2$$

Es bildet sich Aluminiumsulfat, das die Katalysatoroberfläche belegt und damit den Katalysator inaktiviert.

Darüber hinaus werden bei Sauerstoffgeschwindigkeiten entsprechend einer Machzahl von eins, die Sauerstoffdüsen thermisch entlastet, da sich die Flammen der Schwefelwasserstoff/Schwefeldioxid-Freistrahldiffusionsflammen nicht an der Düse stabilisieren, sondern von der Düse abgehoben, frei in der Brennkammer brennen. Zudem werden die Flammenwurzeln so von den Sauerstoffdüsen weg in den Brennraum hinein verlagert. Der für eine Sauerstoffgeschwindigkeit entsprechend einer Machzahl von eins notwendige Sauerstoffabsolutdruck am Düsenaustritt sollte vorzusweise das 1,93-fache des in der Brennkammer herrschenden Druckes (PBRK) betragen.

Der Neigungswinkel der Sauerstoffinjektionslanzen beträgt vorzugsweiswe 45° bis 90° zur Strömungsrichtung, wobei die Achsen der Sauerstoffstrahlen sich in der Mittelachse der Brennkammer schneiden. Die Sauerstoffinjektionslanzen sind mit den Düsen vorteilhaft bündig oder zurückgezogen in die Innenwand der Brennkammer eingebaut.

Bei Brenner, die Drallflammen erzeugen, daß bedeutet, die eine radiale Geschwindigkeits- und Konzentratonsverteilung der einzelnen Gaskomponenten in der Brennkammer aufweisen, werden die Sauerstoffinjektionslanzen vorzugsweise im Abstand von ca. 0,25 des Brennkammerdurchmessers, von der Mitte der Brennkammer gemessen, symmetrisch am Umfang verteilt, eingebaut. Dadurch wird eine entgegen dem Drall der Hauptflamme gerichtete Sauerstoffdrallströmung erzeugt.

Die Sauerstoffinjektionslanzen sind vorzugsweise konzentrisch, wobei die Sauerstoffdüse von einer Ringspaltdüse umhüllt wird. Durch die Ringspaltdüse wird vorteilhaft permanent ein Schutzgas mit einer Mindestaustrittsgeschwindigkeit entsprechend einer Machzahl von 0,2 in die Brennkammer eingeblasen, um die Sauerstoffdüse zu kühlen und vor eindiffundierendem Schwefel zu schützen.

Als Schutzgas wird vorzugsweise Luft, Stickstoff oder Kohlendioxid verwendet.

Versuche haben gezeigt, daß mit diesem Verfahren, in Abhängigkeit von der Schwefelwasserstoffkonzentration, äquivalente Sauerstoffkonzentrationen ($XO_2$) von 21 Vol.% bis 40 Vol.% Sauerstoff realisiert werden können. Die äquivalente Sauerstoffkonzentration wird hier durch die Gleichung

$$(XO_2) = O_2 \text{ gesamt}/(\text{Luft} + O_2 \text{ zusätzlich})$$

beschrieben.

Die Mengen an Claus- und Sauerwasserstrippergas werden entsprechend dem Sauerstoffangebot erhöht.

Beispiele:

Die nachfolgenden Beispiele zeigen, daß aufgrund der hohen äquivalenten Sauerstoffkonzentration und Verbrennungsdichte die Temperatur in der Brennkammer steigt. Im Abhitzekessel wird aufgrund der höheren Abwärmemenge mehr Dampf erzeugt (siehe Tabelle).

| | Beispiel 1 | Beispiel 2 | Beispiel 3 |
|---|---|---|---|
| Claus-Gas kg/h | 442 | 603 | 706 |
| SWS-Gas kg/h | 240 | 259 | 246 |
| Luft Ges. kg/h | 1515 | 1222 | 797 |
| Sauerstoff kg/h | 0 | 71 | 146 |
| Brennkammertemp. °C | 1213 | 1331 | 1415 |
| Abhitzekesseltemp. °C | 597 | 617 | 641 |
| Brennertemperatur °C | 297 | 259 | 268 |
| Reaktortemp. R1 °C | 355 | 387 | 395 |
| $H_2S/SO_2$-Verhältnis | 2,08 | 2,01 | 2,01 |
| Schwefelkapazität % | 100 | 126 | 142 |
| $X_{Claus\text{-}Gas}$ = 85 Vol.%, $X_{SWS\text{-}Gas}$ = 46 Vol.% | | | |

Bei einer Erhöhung der zulässigen Brennkammertemperatur von 1500°C kann die äquivalente Sauerstoffkonzentration auf mindestens 40 Vol.% gesteigert werden. Da Wärme und Stoff gleich schnell ausgetauscht werden, wird die Temperatur in der Brennkammer infolge der intensiven Vermischung auf höherem Niveau vergleichmäßigt und der Wärmeübergang auf die Brennkammerwand verbessert. Daß bedeutet, der über die Brennkammerwand an die Umgebung abgegebene Wärmeanteil ist größer. Der Abhitzekessel wird thermisch entlastet. Die Temperaturen am Brenner und im Combustor steigen nicht an.

Verfahrensbedingt steigen die Temperaturen durch den höheren Schwefelumsatz im katalytischen Reaktor an, wobei die zulässige Betriebstemperatur des Katalysators von bis zu 650°C ausgenutzt werden kann. Die hohen Verbrennungstemperaturen bei dem Einsatz von Sauerstoff wirken sich positiv auf die thermische Spaltung und vollständige Verbrennung von höheren Kohlenwasserstoffen und von Ammoniak aus, wobei insbesondere für eine vollständige Ammoniak-Spaltung und Verbrennung eine Mindesttemperatur von 1350°C eingehalten werden sollte. Bedingt durch den fehlenden Stickstoffballast kann bei einer äquivalenten Sauerstoffkonzentration von 40 Vol.% die Konzentration an Schwefelwasserstoffgas im eingesetzten Gasgemisch auf 20 Vol.% Schwefelwasserstoff abgesenkt werden.

Die Erfindung wird nun anhand von Abbildungen (Fig. 1 bis 3) näher erläutert.

In Fig. 1 bis 3 sind ein Brenner und der daran anschließende Teil der Brennkammer einer Claus-Anlage dargestellt, wobei der in Fig. 1 und Fig. 2 dargestellte Brenner zusätzlich einen Combustor aufweist.

Fig. 1 zeigt den Brenner (1), welchem über ein 3-fach konzentrisches Rohr (2) mit einem inneren Pilotrohr (3) über das mittlere Rohr (4) ein Heizgas und über das äußere Rohr (5) das Claus-/SWS-Gas zugeführt werden. Über Leitung (6) wird Luft in den Brenner (1) geleitet. Die Verbrennung erfolgt im Combustor (7) und daran anschließender Brennkammer (8). Gemäß der Erfindung wird über eine Düse (9) Sauerstoff in die Brennkammer mit hoher Geschwindigkeit eingebracht. Ferner ist hier dargestellt, daß die Lanze zum Einbringen des Sauerstoffs (10) in deren vorderen

Bereich aus einem doppelkonzentrischem Rohr besteht, wobei über das innere Rohr (11) der Sauerstoff und über das äußere Rohr (12) ein Schutzgas eingeleitet wird, um die Düse (9) zu kühlen. Der Winkel "β " bezeichnet hier den Neigungswinkel der Sauerstofflanze in Bezug zur Strömungsrichtung (R). Der Winkel "β liegt erfindungsgemäß im Bereich von 45° (β) und 90° (β'). Connbustor (7) und Brennkammer (8) sind hier einteilig ausgeführt.

Fig. 2 zeigt eine ähnliche Ausführungsform wie Fig. 1, wobei Combustor (7) und Brennkammer (8) voneinander getrennt sind. Der Brenner (1) weist ein 3-fach konzentrisches Rohr (2) mit einem inneren Rohr (3) für Pilotgas, einem mittleren Rohr (4) für Heizgas und einem äußeren

Rohr (5) für Claus-/SWS-Gas auf. Luft wird über Leitung (6) zugeführt. Vor der Brennkammer (8) ist ein Combustor (7) angeordnet. Sauerstoff und ein Schutzgas werden über ein doppelkonzentrisches Rohr zugeführt, wobei der Sauerstoff im inneren Rohr (11) und das Schutzgas im äußeren Rohr (12) geführt werden. Die Sauerstofflanze ist um den Winkel β bis β' (45° bis 90°) gegenüber der Strömungsrichtung ( R ) geneigt in der Vorrichtung angeordnet.

In Fig. 3 schließt die Brennkammer (8) direkt an den Brenner (1) der Claus-Anlage an. Bei dieser Ausführungsform wird das Pilotgas über ein getrenntes Rohr (13) in den Brenner eingeleitet.

## Patentansprüche

1. Verfahren zur Gewinnung von elementarem Schwefel durch Verbrennung von Schwefelwasserstoff oder eines schwefelwassserstoffhaltigen Gases, insbesondere Claus-Verfahren, bei dem der Schwefelwasserstoff oder das schwefelwasserstoffhaltige Gas über eine erste Einrichtung in einem Brenner in einer Brennkammer unter Zusatz von Luft als Oxidationsmedium teilverbrannt wird, wobei Sauerstoff oder sauerstoffhaltiges Gas der Brennkammer über mindestens eine zweite, zusätzliche Einrichtung der Brennkammer zugeführt wird, wodurch der Schwefelwasserstoff oder das schwefelwasserstoffhaltige Gas nachverbrannt wird und anschließend einem Abhitzekessel und danach einem oder mehreren Reaktoren zugeführt wird, wobei das sauerstoffhaltige Gas 80 Vol.% bis 100 Vol.% Sauerstoff enthält.

2. Verfahren nach Anspruch 1,
bei dem der Sauerstoff oder das sauerstoffhaltige Gas eingeblasen wird durch eine oder eine Vielzahl von Einzeldüsen.

3. Verfahren nach Anspruch 1 oder 2,
bei dem die Eintrittsgeschwindigkeit des Sauerstoffes oder des sauerstoffhaltigen Gases in die Brennkammer im Bereich einer Machzahl zwischen 0,4 und 2 liegt, wodurch die Mischung zwischen dem Sauerstoff, der Verbrennungsluft und dem schwefelwasserstoffhaltigem Prozeßgas aufgrund der hohen Turbulenz erhöht wird.

4. Verfahren nach einem der Ansprüche 1 bis 3,
bei dem der Sauerstoff oder des sauerstoffhaltige Gas in die Brennkammer mit einem Winkel in Strömungsrichtung gemessen von 45° bis 90° eintritt.

5. Verfahren nach einem der Ansprüche 1 bis 4,
bei dem bei einem Verfahren mit einem Drall der Hauptflamme in der Brennkammer eine Drallströmung des Sauerstoffs oder sauerstoffhaltigen Gases erzeugt wird, welche entgegen dem Drall der Hauptflamme gerichtet ist.

6. Verfahren nach einem der Ansprüche 1 bis 5,
bei dem die Eintrittsstelle des Sauerstoffes oder des sauerstoffhaltigen Gases in die Brennkammer gekühlt wird und vor einer Eindiffusion von Schwefel geschützt wird.

7. Verfahren nach Anspruch 6,
bei dem zur Kühlung zusätzlich ein Schutzgas im Bereich der Eintrittsstelle des Sauerstoffes oder des sauerstoffhaltigen Gases in die Brennkammer der Brennkammer zugeführt wird.

8. Verfahren nach Anspruch 7,
bei dem als Schutzgas Luft, Stickstoff oder Kohlendioxid verwendet wird.

9. Verfahren nach Anspruch 7 oder 8,
bei dem die Eintrittsgeschwindigkeit des Schutzgases in die Brennkammer mindestens die Machzahl 0,2 aufweist, wodurch die turbulente Mischung zwischen dem Sauerstoff, der Verbrennungsluft und dem schwefelwasserstoffhaltigem Prozeßgas zusätzlich erhöht wird.

**10.** Verfahren nach einem der Ansprüche 1 bis 9,
bei dem die Menge an zugeführtem Sauerstoff entsprechend der Stöchiometrie der Clausreaktion so geregelt wird, daß der Sauerstoff und die Verbrennungsluft vollständig mit dem Schwefelwasserstoff und den anderen brennbaren Gasen reagieren, damit kein Überschußsauerstoff nach der Brennkammer vorhanden ist.

**11.** Verfahren nach einem der Ansprüche 1 bis 10,
bei dem die Menge an zugeführtem Sauerstoff entsprechend der Stöchiometrie der Clausreaktion so geregelt wird, daß das Schwefelwasserstoff/Schwefeldioxid-Verhältnis dem theretischen Wert 2 enspricht.

**12.** Verfahren nach einem der Ansprüche 1 bis 11,
bei dem die Menge an zugeführtem Sauerstoff entsprechend der Stöchiometrie der Clausreaktion so geregelt wird, daß die maximalen Temperaturen im Brenner/Combustor 250°C / 1200°C und die maximale Temperatur in der Brennkammer 1500°C betragen, so daß der Wärmeübergang auf die Brennkammerwand verbessert wird und die maximale Temperatur im Abhitzkessel 670°C beträgt.

**13.** Verfahren nach einem der Ansprüche 1 bis 12,
bei dem die äquivalente Sauerstoffkonzentration zwischen 21 bis 40 Vol.% liegt.

**14.** Verfahren nach einem der Ansprüche 1 bis 13,
bei dem die Konzentration des Schwefelwasserstoffs im eingesetzten Gas mindestens 20 Vol.% beträgt.

**Claims**

**1.** Process for producing elemental sulphur by combustion of hydrogen sulphide or a hydrogen-sulphide-containing gas, in particular a Claus process, in which the hydrogen sulphide or the hydrogen-sulphide-containing gas is, via a first device, partially combusted in a burner in a combustion chamber with addition of air as oxidation medium, oxygen or oxygen-containing gas being fed to the combustion chamber by at least one second additional device of the combustion chamber, by which means the hydrogen sulphide or the hydrogen-sulphide-containing gas is subjected to afterburning and is then fed to a waste-heat boiler and thereafter to one or more reactors, the oxygen-containing gas containing 80% by volume to 100% by volume of oxygen.

**2.** Process according to Claim 1, in which the oxygen or the oxygen-containing gas is blown in by one or a multiplicity of individual nozzles.

**3.** Process according to Claim 1 or 2, in which the intake velocity of the oxygen or the oxygen-containing gas into the combustion chamber is in the range of a Mach number between 0.4 and 2, as a result of which the mixing between the oxygen, the combustion air and the hydrogen-sulphide-containing process gas is increased on account of high turbulence.

**4.** Process according to one of Claims 1 to 3, in which the oxygen or the oxygen-containing gas enters into the combustion chamber at an angle of 45° to 90° measured in the direction of flow.

**5.** Process according to one of Claims 1 to 4, in which, in the case of a process having swirl of the main flame in the combustion chamber, a swirl flow of the oxygen or oxygen-containing gas is produced which is directed against the swirl of the main flame.

**6.** Process according to one of Claims 1 to 5, in which the entry point of the oxygen or the oxygen-containing gas into the combustion chamber is cooled and is protected against sulphur diffusing in.

**7.** Process according to Claim 6, in which, for cooling, in addition, a protecting gas is fed to the combustion chamber in the region of the point of entry of the oxygen or the oxygen-containing gas into the combustion chamber.

**8.** Process according to Claim 7, in which air, nitrogen or carbon dioxide is used as protecting gas.

**9.** Process according to Claim 7 or 8, in which the intake velocity of the protective gas into the combustion chamber is at least Mach number 0.2, as a result of which the turbulent mixture between the oxygen, the combustion air and the hydrogen-sulphide-containing process gas is additionally increased.

**10.** Process according to one of Claims 1 to 9, in which the rate of oxygen fed is controlled in accordance with the stoichiometry of the Claus reaction in such a manner that the oxygen and the combustion air react completely with the hydrogen sulphide and the other combustible gases so that no excess oxygen is present downstream of the combustion chamber.

**11.** Process according to one of Claims 1 to 10, in which the rate of oxygen fed is controlled in accordance with the stoichiometry of the Claus reaction in such a manner that the hydrogen sulphide/sulphur dioxide ratio corresponds to the theoretical value 2.

**12.** Process according to one of Claims 1 to 11, in which the rate of oxygen fed is controlled in accordance with the stoichiometry of the Clause reaction in such a manner that the maximum temperatures in the burner/combustor are 250°C/1200°C and the maximum temperature in the combustion chamber is 1500°C, so that the heat transfer to the combustion chamber wall is improved and the maximum temperature in the waste-heat boiler is 670°C.

**13.** Process according to one of Claims 1 to 12, in which the equivalent oxygen concentration is between 21 and 40% by volume.

**14.** Process according to one of Claims 1 to 13, in which the concentration of the hydrogen sulphide in the feed gas is at least 20% by volume.

**Revendications**

**1.** Procédé pour l'obtention de soufre élémentaire par combustion d'hydrogène sulfuré ou d'un gaz contenant de l'hydrogène sulfuré, en particulier par le procédé Claus, dans lequel l'hydrogène sulfuré ou le gaz contenant de l'hydrogène sulfuré est partiellement brûlé par un premier dispositif dans un brûleur dans une chambre de combustion avec addition d'air en tant que milieu d'oxydation, de l'oxygène ou un gaz contenant de l'oxygène étant envoyé à la chambre de combustion par au moins un second dispositif supplémentaire, de sorte que l'hydrogène sulfuré ou le gaz contenant de l'hydrogène sulfuré est soumis à une post-combustion et ensuite envoyé à une chaudière de récupération, puis à un ou plusieurs réacteurs, le gaz contenant de l'oxygène contenant de 80 % en volume à 100 % en volume d'oxygène.

**2.** Procédé selon la revendication 1, dans lequel l'oxygène ou le gaz contenant de l'oxygène est injecté par une ou plusieurs buses individuelles.

**3.** Procédé selon la revendication 1 ou 2, dans lequel la vitesse d'entrée de l'oxygène ou du gaz contenant de l'oxygène dans la chambre de combustion se situe dans la plage d'un nombre de Mach compris entre 0,4 et 2, ce qui, en raison de la forte turbulence, augmente le mélange entre l'oxygène, l'air de combustion et le gaz de processus contenant de l'hydrogène sulfuré.

**4.** Procédé selon l'une quelconque des revendications 1 à 3, dans lequel l'oxygène ou le gaz contenant de l'oxygène pénètre dans la chambre de combustion sous un angle, mesuré dans le sens du flux, de 45° à 90°.

**5.** Procédé selon l'une quelconque des revendications 1 à 4, dans lequel, dans le cas d'un processus comportant une torsion de la flamme principale dans la chambre de combustion, est engendré un flux de torsion de l'oxygène ou du gaz contenant de l'oxygène, qui est orienté dans le sens contraire de la torsion de la flamme principale.

**6.** Procédé selon l'une quelconque des revendications 1 à 5, dans lequel le point d'entrée de l'oxygène ou du gaz contenant de l'oxygène dans la chambre de combustion est refroidi et est protégé contre une pénétration du soufre par diffusion.

**7.** Procédé selon la revendication 6, dans lequel pour le refroidissement on envoie en outre à la chambre de combustion un gaz protecteur dans la zone du point d'entrée de l'oxygène ou du gaz contenant de l'oxygène dans la chambre de combustion.

**8.** Procédé selon la revendication 7, dans lequel on utilise en tant que gaz protecteur de l'air, de l'azote ou du dioxyde de carbone.

**9.** Procédé selon la revendication 7 ou 8, dans lequel la vitesse d'entrée du gaz protecteur dans la chambre de combustion présente au moins le nombre de Mach 0,2, de sorte que le mélange turbulent entre l'oxygène, l'air de combustion et le gaz de processus contenant de l'hydrogène sulfuré est augmenté additionnellement.

**10.** Procédé selon l'une quelconque des revendications 1 à 9, dans lequel la quantité d'oxygène envoyé conformément à la stoechiométrie de la réaction de Claus est réglée de manière que l'oxygène et l'air de combustion réagissent totalement avec l'hydrogène sulfuré et les autres gaz combustibles afin qu'aucun oxygène en excès ne soit présent après la chambre de combustion.

**11.** Procédé selon l'une quelconque des revendications 1 à 10, dans lequel la quantité d'oxygène envoyé conformément à la réaction de Claus est réglée de telle sorte que le rapport hydrogène sulfuré/anhydride sulfureux correspond à la valeur théorique 2.

**12.** Procédé selon l'une quelconque des revendications 1 à 11, dans lequel la quantité d'oxygène envoyé conformément à la stoechiométrie de la réaction de Claus est réglée de telle sorte que les températures maximales dans le brûleur/l'unité de combustion sont de 250°C/1200°C et la température maximale dans la chambre de combustion est de 1500°C, de sorte que le transfert de chaleur sur la paroi de la chambre de combustion est amélioré et la température maximale dans la chaudière de récupération est de 670°C.

**13.** Procédé selon l'une quelconque des revendications 1 à 12, dans lequel la concentration équivalente d'oxygène est comprise entre 21 et 40 % en volume.

**14.** Procédé selon l'une quelconque des revendications 1 à 13, dans lequel la contamination de l'hydrogène sulfuré dans le gaz utilisé est d'au moins 20 % en volume.

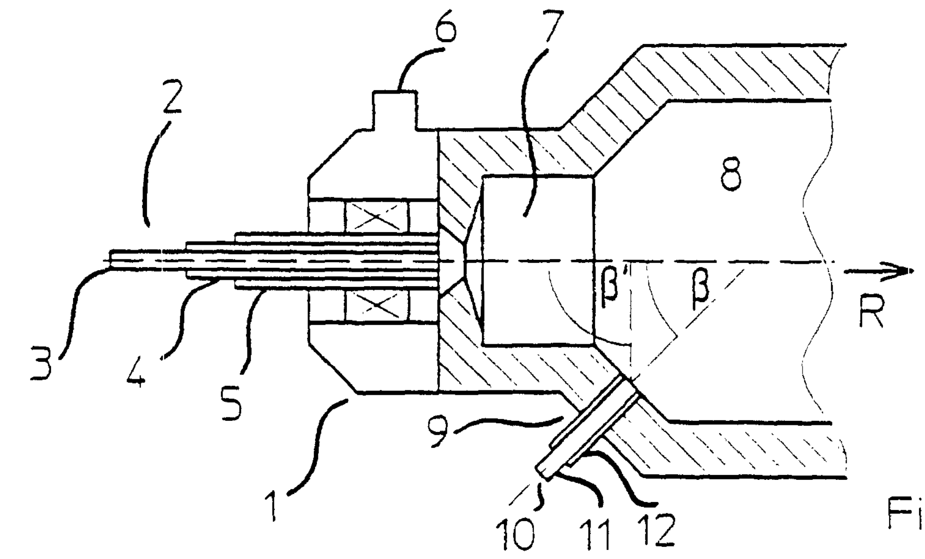


Fig. 1

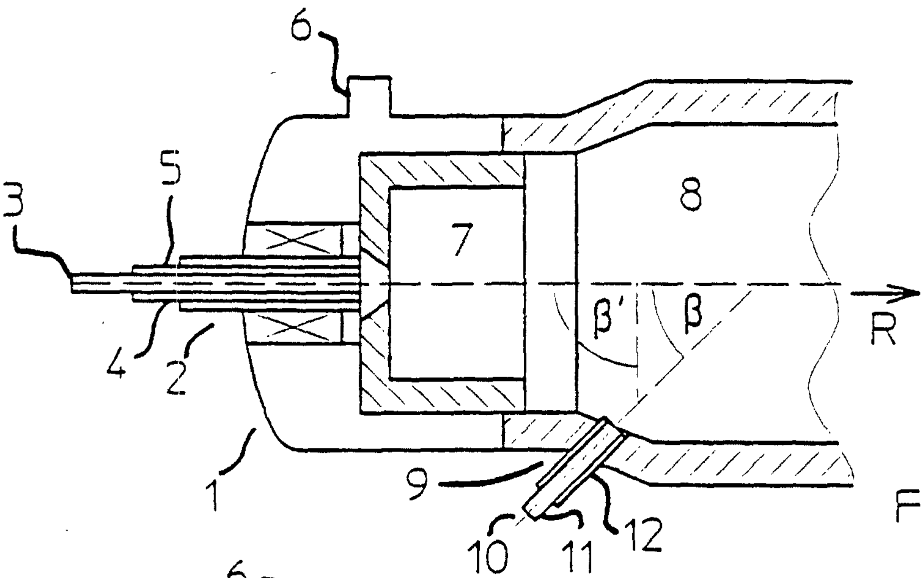


Fig. 2

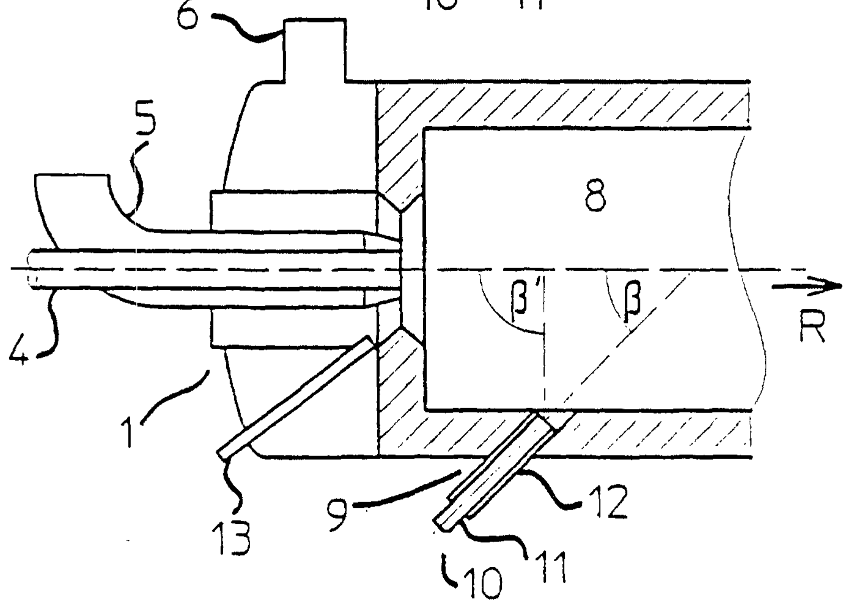


Fig. 3